# EUROPÄISCHE PATENTSCHRIFT

(11) **EP 1 614 340 B1**
(45) Veröffentlichungstag und Bekanntmachung des Hinweises auf die Patenterteilung: **23.04.2008**
(21) Anmeldenummer: 05105263.7
(22) Anmeldetag: 15.06.2005
(51) Int. Cl.: A01D 61/00, A01D 41/12

(54) **Querförderschnecke für einen Erntevorsatz**
Transversal screw conveyor for a harvesting attachment
Hélice transporteuse transversale pour dispositif de récolte

(30) Priorität: 08.07.2004 DE 102004033089
(43) Veröffentlichungstag der Anmeldung: 11.01.2006
(73) Patentinhaber: Maschinenfabrik Kemper GmbH & Co. KG, 48973 Stadtlohn (DE)
(72) Erfinder: Weiand, Norbert, 48703 Stadtlohn (DE)
(74) Vertreter: Holst, Sönke

(56) Entgegenhaltungen:
- EP-A- 0 557 702
- US-A- 3 244 271
- US-A- 4 881 920

## Beschreibung

Die Erfindung betrifft eine Querförderschnecke für einen Erntevorsatz, mit einem Körper, um den Körper angeordneten, spiralförmigen Windungen, die jeweils von einer Außenseite des Körpers in Richtung auf seine Mitte zu verlaufen und einer stromab der Windungen angeordneten, einen geschlossenen Ring bildenden Endscheibe.

Bei der Ernte von Pflanzen mit landwirtschaftlichen Erntemaschinen wird das Erntegut in der Regel zunächst vom Boden des Feldes aufgenommen (beispielsweise mit Zinken einer Pick-Up) oder abgeschnitten (z. B durch den Messerbalken eines Schneidwerks oder Mäh- und Einzugseinrichtungen eines Maisgebisses bzw. Einzug- und Pflückeinrichtungen eines Maispflückers). Die Pflanzen oder davon abgetrennte Fruchtstände, wie Maiskolben, werden dann in Querrichtung zusammengefördert und an den Einzugskanal oder Schrägförderer der Erntemaschine abgegeben. Die Querförderung erfolgt bei vielen Erntevorsätzen durch eine Querförderschnecke.

Eine Querförderschnecke ist in der DE 38 04 598 A dargestellt. Sie ist aus einem kreiszylindrischen Rohr und um dessen Umfang angebrachten, spiralförmigen Windungen zur Förderung des Ernteguts aufgebaut. Im mittleren Bereich der Querförderschnecke, hinter dem der Einzugskanal des Feldhäckslers liegt, enden die von beiden Seiten einlaufenden spiralförmigen Windungen. An die Windungen schließen sich Endscheiben an, deren Umfang teilweise durch einen Kreisbogen um die Schneckenachse gebildet wird. Stromab des Kreisbogens vermindert sich der Radius der Endscheiben spiralförmig, so dass sie spitz auslaufen. Zwischen den Endscheiben befinden sich axial verlaufende, radial abstehende Förderplatten zur Förderung des Ernteguts nach hinten. Die US 4 881 920 A, DE 41 09 064 C und die DE 199 39 168 A zeigen Querförderschnecken mit sich radial erstreckenden, kreisförmigen Endscheiben.

In der EP 557 702 A sind die Endscheiben ebenfalls mit einer Steigung ausgestattet, d.h. sie erstrecken sich in axialer Richtung der Querförderschnecke. Sie verengen sich nach innen sukzessive und haben einen wellenförmigen Umfang.

Die Querförderschnecken haben die Aufgabe, das Erntegut über die Breite des Einzugskanals möglichst gleichmäßig abzugeben, damit die Arbeitsorgane der Erntemaschine ebenfalls über ihre Breite betrachtet möglichst gleichmäßig beaufschlagt werden. Diese Gleichmäßigkeit ist beispielsweise bei konventionellen Mähdreschern mit Strohschüttlern wichtig, da relativ stark belastete Schüttler höhere Verluste produzieren als weniger stark belastete. Bei Ballenpressen ist ebenfalls eine über die Breite gleichmäßige Gutzufuhr wichtig, damit der Ballen in sich homogen ist.

Die Querförderschnecken mit Endscheiben geben das von den Windungen herangeführte Gut zum größten Teil an den sich radial erstreckenden Endscheiben (DE 38 04 598 A, DE 41 09 064 A, DE 199 39 168 A) nach hinten ab, während eventuell zwischen den Endscheiben angeordnete Förderelemente im Wesentlichen nur das im Bereich ihrer Breite einlaufende Gut nach hinten fördern. Der Einzugskanal der Erntemaschine ist somit in vielen Fällen außen stärker mit Erntegut beaufschlagt als innen.

Die Ausführungsform nach EP 0 557 702 A mit ihren mit einer Steigung versehenen, sich nur um einen Teil des Umfangs des Körpers der Querförderschnecke erstreckenden Endscheiben bewirkt zwar eine gewisse Breitenverteilung des abgegebenen Erntegutes, jedoch ist ihre Wirkung aufgrund der relativ geringen Abmessungen der Endscheiben nicht besonders wesentlich.

Die US 3 244 271 A beschreibt eine Querförderschnecke mit wendelförmigen Endscheiben.

Die der Erfindung zu Grunde liegende Aufgabe wird darin gesehen, eine Querförderschnecke bereitzustellen, bei der die genannten Probleme in geringerem Maße auftreten.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Querförderschnecke ist aus einem Körper und um den Körper gelegten Windungen aufgebaut. Von beiden Enden des Körpers verläuft jeweils mindestens eine Windung auf die Mitte des Körpers zu. Dort ist eine Endscheibe angeordnet, die einen geschlossenen Ring bildet und deren Ebene mit der Radialebene des Körpers einen spitzen Winkel einschließt. Die Endscheibe vollführt bei rotierendem Körper somit eine Taumelbewegung.

Durch die Ringform der Endscheibe verhindert man, dass Erntegut im Bereich des Einzugskanals der Erntemaschine auf die gegenüberliegende Seite der Querförderschnecke durchläuft. Da die Endscheibe eine Taumelbewegung vollführt, wird im Gegensatz zu sich radial erstreckenden Endscheiben ein toter Bereich vermieden, in dem keine Erntegutförderung stattfindet. Die Taumelbewegung unterstützt auch eine Bewegung des Ernteguts in Richtung des Einzugskanals der Erntemaschine und vermindert auf diese Weise mögliche Erntegutverluste, z. B. von Maiskolben.

Vorzugsweise ist in der Mitte des Körpers nur eine einzige Endscheibe angeordnet, die sich zumindest näherungsweise quer zur Längsachse des Körpers erstreckt. Die Endscheibe befindet sich somit in der Mitte vor dem Einzugskanal der Erntemaschine. Dadurch wird eine Materialanhäufung in der Mitte des Einzugskanals der Erntemaschine vermieden, da das Erntegut an der linken und rechten Seite des Einzugskanals getrennt zugeführt wird. Das Erntegut sammelt sich seitlich der mittigen Endscheibe an, so dass beträchtliche Anteile des Ernteguts im Abstand von der Endscheibe an den Einzugskanal der Erntemaschine abgegeben werden. Die Beschickung der Erntemaschine wird dadurch verbessert. Außerdem verhindert die Endscheibe eine Materialanlagerung an den Enden der Windungen.

Die Endscheibe ist vorzugsweise elliptisch, obwohl es auch denkbar wäre, ihren Umfang in beliebiger anderer Weise zu gestalten. So könnte er von der Übergangsstelle zu den Windungen in der Drehrichtung kleiner oder größer werden oder wellenförmig gestaltet sein.

Die beiden von außen einlaufenden Windungen können jeweils an der Endscheibe enden bzw. mit ihr verbunden sein. Alternativ enden sie im Abstand von der Endscheibe, insbesondere in einer radial zum Körper verlaufenden oder sich kontinuierlich abflachenden Kante. Enden die Windungen im Abstand von der Endscheibe, besteht die Möglichkeit, in der Mitte des Körpers zwischen den Windungen und der Endscheibe einen von Windungen freien Bereich vorzusehen, oder hier axial verlaufende Bereiche der Windungen vorzusehen bzw. die Windungen in axial verlaufende Zwischenbleche übergehen zu lassen. Diese Bereiche erstrecken sich vorzugsweise radial zum Körper.

Die erfindungsgemäße Querförderschnecke eignet sich für alle Erntevorsätze und Erntemaschinen, bei denen Erntegut in einer Richtung zusammenzuführen ist. Beispiele sind Pick-Ups für Ballenpressen, Feldhäcksler und Ladewagen, Schneidwerke und Maispflücker für Mähdrescher und Maisgebisse für Feldhäcksler.

In den Zeichnungen sind zwei nachfolgend näher beschriebene Ausführungsbeispiele der Erfindung dargestellt. Es zeigt:
- Fig. 1: eine perspektivische Ansicht einer ersten Ausführungsform einer erfindungsgemäßen Querförderschnecke,
- Fig. 2: einen mit der Querförderschnecke aus Figur 1 ausgestatteten Maispflücker,
- Fig. 3: eine Draufsicht auf eine zweite Ausführungsform einer Querförderschnecke, und
- Fig. 4: eine perspektivische Ansicht der Querförderschnecke aus Figur 3.

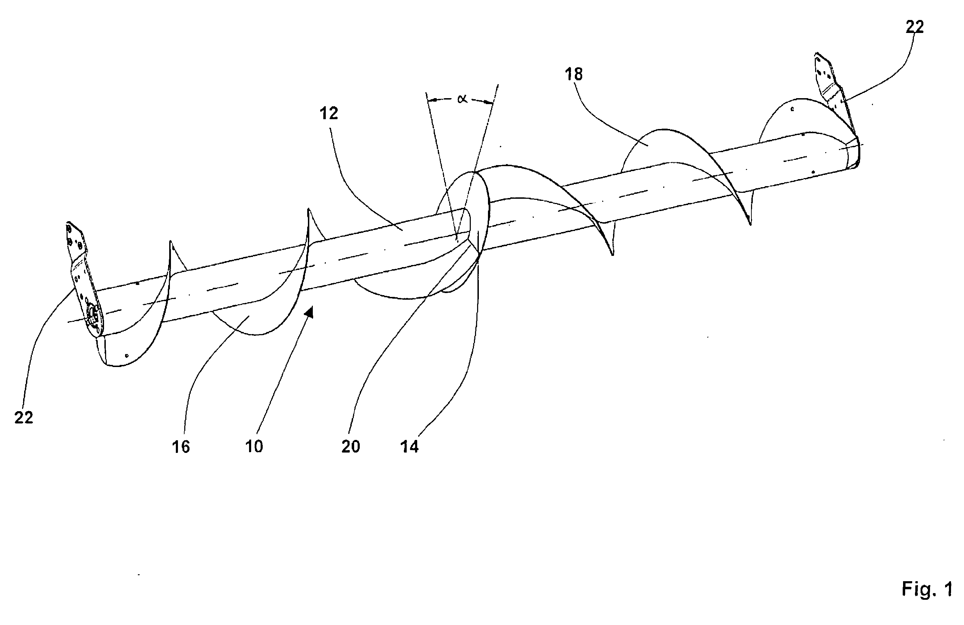

Die in Figur 1 zeichnerisch dargestellte Querförderschnecke 10 setzt sich aus einem kreiszylindrischen, rohrförmigen Körper 12, einer mittigen, ringförmigen Endscheibe 14 und zwei spiralförmigen Windungen 16, 18 zusammen. Die Windungen 16, 18 erstrecken sich jeweils wendelförmig von einem äußeren Ende der Querförderschnecke 10 bis zur Endscheibe 14 in der Mitte des Körpers 12. Die Windungen 16, 18 schließen jeweils in einer sich etwa radial zum Körper 12 erstreckenden Kante 20 an die Endscheibe 14 an und sind dort mit einer durchgehenden Schweißnaht befestigt. Der äußere Durchmesser der Windungen 16, 18 ist über die Länge des Körpers 12 konstant und ist etwas geringer als der äußere Durchmesser der Endscheibe 14. In einer anderen Ausführungsform können die Durchmesser von Endscheibe 14 und Windungen 16, 18 übereinstimmen oder der Durchmesser der Endscheibe ist etwas geringer als der der Windungen 16, 18. An den Enden des Körpers 12 sind Halterungen 22 zur Befestigung der Querförderschnecke 10 am Rahmen eines Erntevorsatzes vorgesehen.

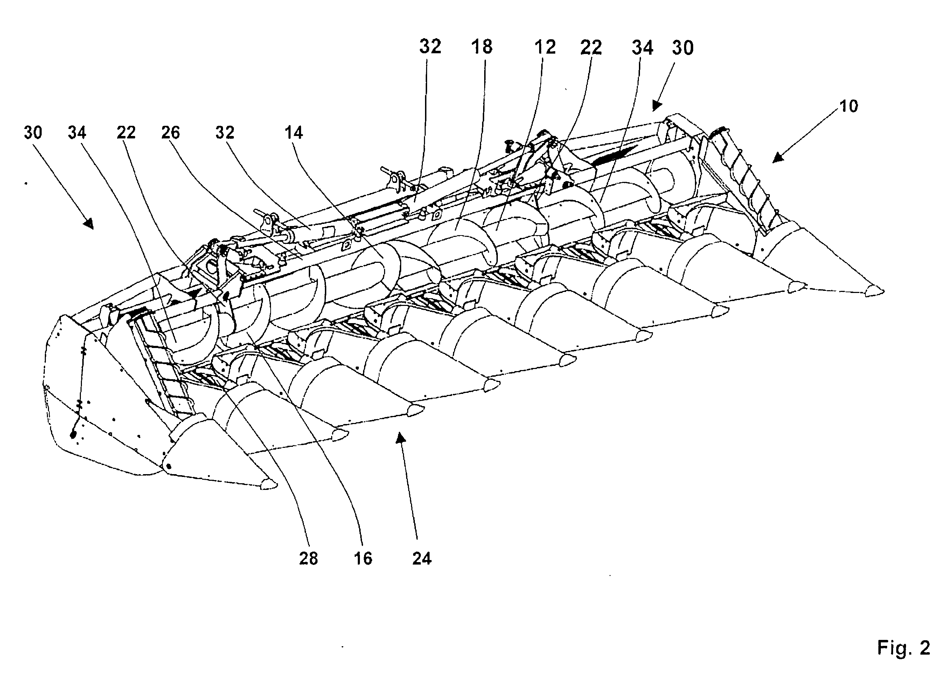

Die Endscheibe 14 liegt in einer Ebene, die mit der Ebene, die sich orthogonal zur Längsachse des Körpers 12 durch den Mittelpunkt der Endscheibe 14 erstreckt, einen Winkel α einschließt. Der Winkel α ist in der dargestellten Ausführungsform relativ spitz und beträgt etwa 15°. Er könnte jedoch auch größer oder kleiner sein. Aufgrund dieses Winkels α ist der Außenumfang der Endscheibe 14 und ihre den Körper 12 umschließende mittige Öffnung nicht kreisförmig, sondern elliptisch geformt, um den Abstand zwischen der Drehachse des Körpers 12 und dem Umfang der Endscheibe 14 konstant zu halten, so dass ein gegebener Abstand zwischen dem Boden des Erntevorsatzes 24 (Figur 2) und der Endscheibe 14 bei deren Drehung konstant bleibt. Es kann aber auch eine beliebige andere Form des Umfangs der Endscheibe 14 gewählt werden.

Die Figur 2 zeigt einen Erntevorsatz 24 in Form eines Maispflückers mit einer erfindungsgemäßen Querförderschnecke 10. Der Erntevorsatz 24 weist einen Rahmen 26 auf, über dessen Vorderfront acht Einzugs- und Pflückeinrichtungen 28 verteilt sind. Die Einzugs- und Pflückeinrichtungen 28 trennen im Erntebetrieb die Fruchtstände (Kolben) von den Pflanzen, deren Stängel zerhäckselt und auf dem Feld abgelegt werden. Die Kolben werden durch die um ihre Längsachse in Rotation versetzte Querförderschnecke 10 erfasst und zur Mitte des Erntevorsatzes 24 gefördert, an deren Rückseite der Schrägförderer eines Mähdreschers angeordnet ist. An beiden Seiten des Erntevorsatzes 24 sind Seitenteile 30 vorgesehen, die durch Hydraulikzylinder 32 zum Transport nach oben schwenkbar sind. Die Seitenteile 30 sind mit Querförderschneckenabschnitten 34 ausgestattet, die sich in der dargestellten Arbeitsstellung an die Querförderschnecke 12 anschließen und zwecks Antrieb drehmomentschlüssig mit ihr verbunden sind.

Die erfindungsgemäße Querförderschnecke 10 mit der mittigen Endscheibe 14, an deren beiden Seiten sich die Wicklungen 16, 18 anschließen, bewirkt, dass nicht der größte Teil des Ernteguts in der Mitte des Schrägförderers abgegeben wird. Ein beträchtlicher Teil wird bezüglich der Vorwärtsrichtung des Erntevorsatzes 24 weiter links und rechts der Mitte abgegeben, so dass der Mähdrescher etwa gleichmäßig beschickt wird. Die Endscheibe 14 verhindert außerdem Pflanzenwickler an den Enden der Windungen 16, 18. Durch den Winkel α vollführt die Endscheibe 14 beim Erntebetrieb, in dem sich der Körper 12 um seine Längsachse dreht, eine Taumelbewegung. Sie überstreicht daher sukzessive andere Teile des Bodens des Erntevorsatzes 24 und des sich dahinter anschließenden Einzugskanals der den Erntevorsatz 24 tragenden Erntemaschine. Ein Bereich, in dem keine Förderung von Erntegut durch die Endscheibe 14 stattfindet, liegt - anders als bei bekannten, sich radial erstreckenden Endscheiben - nicht vor. Die Erntegutförderung wird daher wesentlich verbessert.

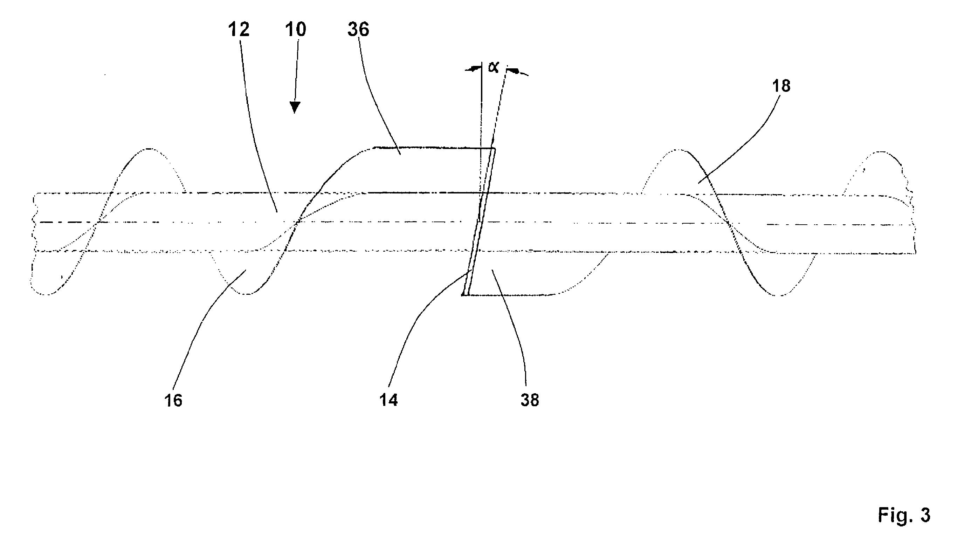

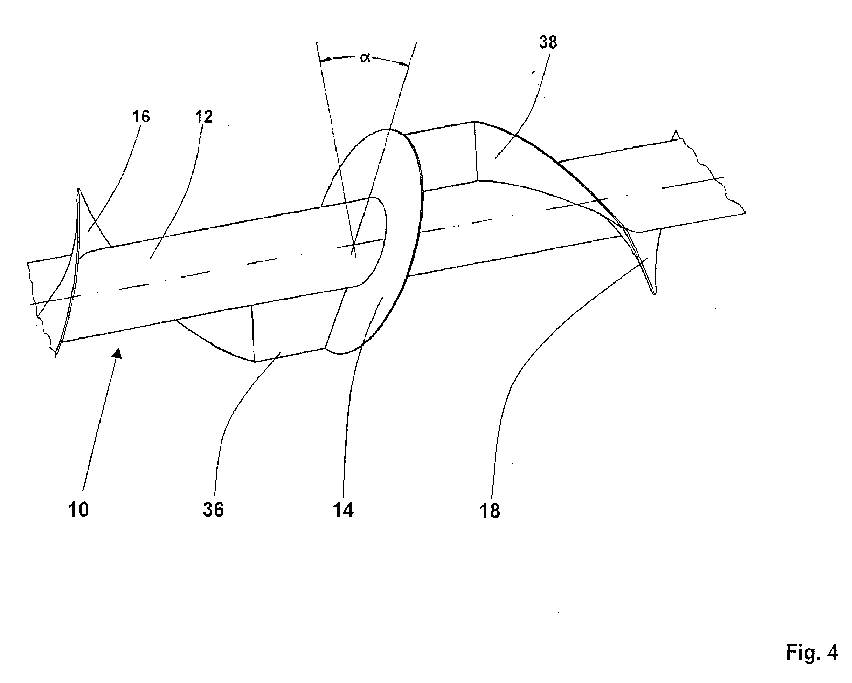

In den Figuren 3 und 4 ist eine zweite Ausführungsform einer erfindungsgemäßen Querförderschnecke 10 dargestellt, die ebenfalls im Erntevorsatz 24 aus Figur 2 verwendbar ist. Mit der ersten Ausführungsform übereinstimmende Elemente sind mit denselben Bezugszeichen dargestellt. Die Querförderschnecke 10 nach Figur 3 unterscheidet sich von der Ausführungsform nach Figur 1 im Wesentlichen dadurch, dass die Windungen 16, 18 im Abstand von der Endscheibe 14 enden und dort in Bereiche 36, 38 übergehen, die sich axial und radial zum Körper 12 erstrecken. Diese Bereiche 36, 38 reduzieren die Bewegung des Ernteguts zur Mitte des Erntevorsatzes 24 hin und unterstützen die Bewegung nach hinten in die Erntemaschine. Die Bereiche 36, 38 könnten auch Windungen sein, die jedoch eine größere Steigung und/oder eine geringere Höhe über dem Körper 12 als die äußeren Windungen 16, 18 aufweisen. In dieser Ausführungsform stimmen die Außendurchmesser der Bereiche 36, 38, der Windungen 16, 18 und der Endscheibe 14 näherungsweise überein.

## Patentansprüche

1. Querförderschnecke (10) für einen Erntevorsatz (24), mit einem Körper (12), um den Körper (12) angeordneten, spiralförmigen Windungen (16, 18), die jeweils von einer Außenseite des Körpers (12) in Richtung auf seine Mitte zu verlaufen und einer stromab der Windungen (16, 18) angeordneten, einen geschlossenen Ring bildenden Endscheibe (14), **dadurch gekennzeichnet, dass** sich die Endscheibe (14) in einer Ebene erstreckt, die einen spitzen Winkel (α) mit der sich orthogonal zur Längsachse des Körpers (12) erstreckenden Ebene einschließt.

2. Querförderschnecke (10) nach Anspruch 1, **dadurch gekennzeichnet, dass** der Umfang der Endscheibe (14) elliptisch ist, so dass der Abstand zwischen dem Rand der Endscheibe (14) und der Drehachse des Körpers (12) über den Umfang der Endscheibe (14) konstant ist.

3. Querförderschnecke (10) nach einem der Ansprüche 1 oder 2, **dadurch gekennzeichnet, dass** nur eine einzige, in der Mitte des Körpers (12) angeordnete Endscheibe (14) vorhanden ist.

4. Querförderschnecke (10) nach Anspruch 3, **dadurch gekennzeichnet, dass** die Endscheibe (14) sich mittig vor einem Einzugskanal einer Erntemaschine befindet.

5. Querförderschnecke (10) nach einem der Ansprüche 1 bis 4, **dadurch gekennzeichnet, dass** die Windungen (16, 18) jeweils in einer sich etwa radial zum Körper (12) erstreckenden Kante (20) an die Endscheibe (14) anschließen.

6. Querförderschnecke (10) nach einem der Ansprüche 1 bis 5, **dadurch gekennzeichnet, dass** die Windungen (16, 18) an ihren der Mitte der Querförderschnecke (10) benachbarten Enden in sich axial zum Körper (12) erstreckende Bereiche (36, 38) übergehen.

7. Querförderschnecke (10) nach einem der Ansprüche 1 bis 6, **dadurch gekennzeichnet, dass** äußere Durchmesser der Windungen (16, 18) kleiner oder gleich dem äußeren Durchmesser der Endscheibe (14) ist.

8. Erntevorsatz (24), insbesondere Maispflücker, Maisgebiss, Schneidwerk oder Pick-Up mit einer Querförderschnecke (10) nach einem der Ansprüche 1 bis 7.

## Claims

1. Transversal screw conveyor (10) for a harvesting attachment (24), with a body (12), spiral turns (16, 18) which are arranged around the body (12) and each run from an outer side of the body (12) in the direction of its centre, and a terminal disc (14) which is arranged downstream of the turns (16, 18) and forms a closed ring, **characterized in that** the terminal disc (14) extends in a plane which encloses an acute angle (α) with the plane which extends orthogonally with respect to the longitudinal axis of the body (12).

2. Transversal screw conveyor (10) according to Claim 1, **characterized in that** the circumference of the terminal disc (14) is elliptical, and therefore the distance between the border of the terminal disc (14) and the axis of rotation of the body (12) is constant over the circumference of the terminal disc (14).

3. Transversal screw conveyor (10) according to either of Claims 1 and 2, **characterized in that** there is only a single terminal disc (14) which is arranged in the centre of the body (12).

4. Transversal screw conveyor (10) according to Claim 3, **characterized in that** the terminal disc (14) is located centrally in front of an intake channel of a harvesting machine.

5. Transversal screw conveyor (10) according to one of Claims 1 to 4, **characterized in that** the turns (16, 18) each adjoin the terminal disc (14) at an edge (20) which extends approximately radially with respect to the body (12).

6. Transversal screw conveyor (10) according to one of Claims 1 to 5, **characterized in that** the turns (16, 18) merge at their ends which are adjacent to the centre of the transversal screw conveyor (10) into regions (36, 38) which extend axially with respect to the body (12).

7. Transversal screw conveyor (10) according to one of Claims 1 to 6, **characterized in that** an outer diameter of the turns (16, 18) is smaller than or equal to the outer diameter of the terminal disc (14).

8. Harvesting attachment (24), in particular maize picker, maize cutter, cutting apparatus or pick-up with a transversal screw conveyor (10) according to one of Claims 1 to 7.

## Revendications

1. Hélice transporteuse transversale (10) pour un dispositif de récolte (24), avec un corps (12), des spires hélicoïdales (16, 18) disposées autour du corps (12), qui partent chaque fois d'un côté extérieur du corps (12) en direction de son milieu, et un disque d'extrémité (14) disposé en aval des spires (16, 18) et formant un anneau fermé, **caractérisée en ce que** le disque d'extrémité (14) s'étend dans un plan, qui forme un angle aigu (α) avec le plan s'étendant orthogonalement à l'axe longitudinal du corps (12).

2. Hélice transporteuse transversale (10) selon la revendication 1, **caractérisée en ce que** le périmètre du disque d'extrémité (14) est elliptique, de telle manière que la distance entre le bord du disque d'extrémité (14) et l'axe de rotation du corps (12) soit constante sur le périmètre du disque d'extrémité (14).

3. Hélice transporteuse transversale (10) selon l'une quelconque des revendications 1 ou 2, **caractérisée en ce qu'**elle ne comporte qu'un seul disque d'extrémité (14) disposé au milieu du corps (12).

4. Hélice transporteuse transversale (10) selon la revendication 3, **caractérisée en ce que** le disque d'extrémité (14) se trouve au milieu devant un canal d'entrée d'une machine de récolte.

5. Hélice transporteuse transversale (10) selon l'une quelconque des revendications 1 à 4, **caractérisée en ce que** les spires (16, 18) se raccordent au disque d'extrémité (14) selon une arête (20) s'étendant sensiblement radialement par rapport au corps (12).

6. Hélice transporteuse transversale (10) selon l'une quelconque des revendications 1 à 5, **caractérisée en ce que** les spires (16, 18) se poursuivent chaque fois, à leurs extrémités voisines du milieu de l'hélice transporteuse transversale (10), par des zones (36, 38) s'étendant axialement par rapport au corps (12).

7. Hélice transporteuse transversale (10) selon l'une quelconque des revendications 1 à 6, **caractérisée en ce que** le diamètre extérieur des spires (16, 18) est inférieur ou égal au diamètre extérieur du disque d'extrémité (14).

8. Dispositif de récolte (24), en particulier cueilleuse de maïs, dispositif à maïs pour moissonneuse-batteuse, appareil de coupe ou dispositif de ramassage avec une hélice transporteuse transversale (10) selon l'une quelconque des revendications 1 à 7.
